# EUROPÄISCHE PATENTANMELDUNG

(11) **EP 3 992 733 A1**
(43) Veröffentlichungstag der Anmeldung: **04.05.2022**
(21) Anmeldenummer: 20204440.0
(22) Anmeldetag: 28.10.2020
(51) Int. Cl.: G05B 17/02, G05B 19/418, G05B 13/02

(54) **MASCHINENBELEGUNGSPLANUNG FÜR EINE KOMPLEXE FERTIGUNGSANLAGE**

(71) Anmelder: Siemens Aktiengesellschaft, 80333 München (DE)
(72) Erfinder: Krompaß, Denis, 81549 München (DE); Lohmeyer, Robert, 80469 München (DE)

(57) **Zusammenfassung**

Die Erfindung betrifft ein Verfahren zur Maschinenbelegungsplanung, bei dem ein Agent (AGENT) die Maschinenbelegungsplanung anhand einer eine Fertigungsanlage abbildenden Simulation (SIMULATION) erlernt. Das Lernen erfolgt durch den Agenten (AGENT) iterativ als reinforcement learning, indem der Agent (AGENT) wiederholt jeweils einer oder mehreren Maschinen der Fertigungsanlage mindestens einen Prozessschritt zuweist (Action). Danach führt der Agent (AGENT) die Maschinenbelegungsplanung einer der Simulation (SIMULATION) entsprechenden Fertigungsanlage durch. Weiterhin betrifft die Erfindung hierzu korrespondierend eine Vorrichtung oder ein System zur Datenverarbeitung, ein Computerprogramm, einen computerlesbaren Datenträger, sowie ein Datenträgersignal.

## Beschreibung

Die Erfindung betrifft ein Verfahren zur Maschinenbelegungsplanung, bei welchem ein softwarebasierter Agent und eine softwarebasierte Simulation zum Einsatz kommen.

Industrielle Fertigungsprozesse erfolgen meist in einer Vielzahl von Fertigungsschritten, welche jeweils auf verschiedenen Maschinen durchgeführt werden. Diese Maschinen können teilweise jeweils mehrere unterschiedliche Prozessschritte durchführen, wobei sie für diese Aufgaben hinsichtlich Fertigungsdauer oder Verschleiß unterschiedlich gut geeignet sein können. Bei paralleler Durchführung mehrerer Fertigungsprozesse innerhalb derselben Fabrik stellt die Maschinenbelegungsplanung, also die Aufteilung der erforderlichen Prozessschritte auf die Maschinen und die Bestimmung ihrer Reihenfolge, ein komplexes Optimierungsproblem hinsichtlich verschiedener Leistungskennzahlen (englisch: Key Performance Indikator, KPI) wie Fertigungsdauer, wirtschaftlichem Ertrag, Maschinenverschleiß, Energieverbrauch, usw. dar.

Der Erfindung liegt die Aufgabe zugrunde, ein Verfahren zur Unterstützung der Maschinenbelegungsplanung aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Bei dem erfindungsgemäßen Verfahren erlernt ein Agent die Maschinenbelegungsplanung anhand einer eine Fertigungsanlage abbildenden Simulation. Das Lernen durch den Agenten erfolgt iterativ als reinforcement learning. Hierbei weist der Agent wiederholt jeweils einer oder mehreren Maschinen der Fertigungsanlage mindestens einen Prozessschritt zu. Im Anschluss an das Lernen führt der Agent die Maschinenbelegungsplanung einer der Simulation entsprechenden Fertigungsanlage durch.

Zum Erlernen der Maschinenbelegungsplanung interagiert der Agent mit der Simulation. Die Simulation bildet dabei eine Umgebung ab, innerhalb derer die Maschinenbelegungsplanung stattfinden kann. Insbesondere bildet die Simulation Maschinen ab, welche Prozessschritte durchführen können.

Das Lernen erfolgt iterativ, d.h. die Interaktion zwischen Agent und Simulation erfolgt mehrmals hintereinander. Die Handlungsanweisungen des Agenten an die Simulation stellen Zuweisungen von Prozessschritt zu Maschine dar. Ziel der Iterationen ist es, die Handlungsanweisungen des Agenten zu verbessern. Nachdem der Lernvorgang abgeschlossen ist, kann der Agent dann in einer echten Umgebung zum Einsatz kommen, um hier die Maschinenbelegungsplanung vorzunehmen. Diese echte Umgebung sollte weitestgehend der Simulation entsprechen, um gute Ergebnisse der Tätigkeit des Agenten zu ermöglichen.

Besonders vorteilhaft ist es, wenn das reinforcement learning unter Verwendung eines tiefen neuronalen Netzes des Agenten erfolgt.

In Weiterbildung der Erfindung empfängt der Agent von der Simulation wiederholt eine oder mehrere der folgenden Informationen betreffend die Maschinen der Fertigungsanlage:
- eine Zuordnung zwischen jeweiliger Maschine und auf ihr durchführbarem Prozessschritt,
- der jeweiligen Maschine durch den Agenten bereits zugewiesene Prozessschritte,
- einen Betriebszustand der jeweiligen Maschine,
- eine Abnutzung der jeweiligen Maschine.

In Weiterbildung der Erfindung empfängt der Agent von der Simulation wiederholt eine oder mehrere der folgenden Informationen betreffend durch den Agenten noch nicht zugewiesene Prozessschritte:
- eine Zuordnung zwischen jeweiligem Prozessschritt und hierfür geeigneter Maschine,
- Fälligkeitsdatum des jeweiligen Prozessschrittes,
- Dauer der Durchführung des jeweiligen Prozessschrittes,
- erzielbare Einnahme aufgrund der Durchführung des jeweiligen Prozessschrittes,
- entstehender Verlust aufgrund nicht erfolgter oder verspäteter Durchführung des jeweiligen Prozessschrittes.

Für beide Arten der oben genannten Informationen, also sowohl für diejenigen betreffend die Maschinen, als auch für diejenigen betreffend die Prozessschritte, gilt:
Diese von der Simulation an den Agenten übertragenen Informationen über den Zustand der offenen Prozessschritte betreffen alle Prozessschritte und alle Maschinen, für welche die Maschinenbelegungsplanung durchzuführen ist. Vorzugsweise werden die aktuellen Informationen übermittelt, welche also gerade dem aktuellen Zustand der Simulation entsprechen. Von Übermittlung zu Übermittlung können stets die gleichen der oben genannten Informationen zum Einsatz kommen, oder auch unterschiedliche. Ein Beispiel für letzteres ist, dass Informationen nur dann gesendet werden, wenn sie sich gegenüber der letzten Übermittlung geändert haben.

In Weiterbildung der Erfindung empfängt der Agent von der Simulation wiederholt eine oder mehrere der folgenden Leistungskennzahlen:
- Anzahl gemäß einer Zuweisung durch den Agenten durchgeführter Prozessschritte,
- Einnahme aufgrund gemäß einer Zuweisung durch den Agenten durchgeführter Prozessschritte,
- Energieverbrauch aufgrund gemäß einer Zuweisung durch den Agenten durchgeführter Prozessschritte,
- Leerzeit von Maschinen.

Vorzugsweise werden die aktuellen Informationen übermittelt, welche also gerade aus dem aktuellen Zustand der Simulation hervorgehen. Von Übermittlung zu Übermittlung können stets die gleichen der oben genannten Informationen zum Einsatz kommen, oder auch unterschiedliche. Ein Beispiel für letzteres ist, dass Informationen nur dann gesendet werden, wenn sie sich gegenüber der letzten Übermittlung geändert haben.

Vorzugsweise übermittelt der Agent iterativ Zuweisungen von mindestens einem Prozessschritt zu einer oder mehreren Maschinen der Fertigungsanlage an die Simulation, und empfängt daraufhin Informationen betreffend den Zustand der Fertigungsanlage von der Simulation. Diese beiden Schritte wechseln sich im Laufe des Lernvorgangs kontinuierlich ab. Dies kann z.B. derart erfolgen, dass der Agent eine Zuweisung als Zweier-Tupel an die Simulation übermittelt, bestehend aus einem Prozessschritt und einer Maschine, und der Agent von der Simulation Informationen empfängt betreffend den unter Berücksichtigung der Zuweisung sich ergebenden Zustand der Fertigungsanlage. Die Zuweisungen des Agenten werden also von der Simulation berücksichtigt, so dass der Zustand der Fertigungsanlage neu bestimmt und an den Agenten zurückgemeldet werden kann.

Vorteilhaft ist es, wenn der Agent die Zuweisungen bestimmt, indem er eine Zielsetzungsgewichtung von der Simulationen empfangenen Leistungskennzahlen optimiert. Die Vorgabe der Zielsetzungsgewichtung an den Agenten entspricht dem Ziel, welches mit der Maschinenbelegungsplanung angestrebt wird. Durch diese Vorgabe kann daher der Fokus der Maschinenbelegungsplanung auf verschiedene Faktoren gerichtet werden, welche für einen Betreiber einer Fertigungsanlage relevant sein können. Hierbei kann so verfahren werden, dass die Zielsetzungsgewichtung während dem Lernen variiert wird, so dass der Agent die Maschinenbelegungsplanung basierend auf verschiedenen Zielsetzungsgewichtungen erlernt. Dies ermöglicht einen flexiblen Einsatz des Agenten in der echten Umgebung, da der Betreiber die Zielsetzungsgewichtung anpassen kann, um bei Bedarf das Ziel der Maschinenbelegungsplanung entsprechend zu ändern.

In Ausgestaltung der Erfindung bestimmt der Agent im Rahmen des reinforcement learning eine Belohnung, indem er von der Simulation empfangene Leistungskennzahlen mit von ihm vorhergesagten Leistungskennzahlen vergleicht. Je besser die Prognose des Agenten mit dem von der Simulation übermittelten Zustand übereinstimmt, desto höher ist die Belohnung des Agenten.

Im Folgenden wird die Erfindung anhand eines Ausführungsbeispiels näher erläutert. Dabei zeigen:
- Figur 1:: schematisch eine Produktionsanlage,
- Figur 2:: den Lernzyklus eines Agenten.

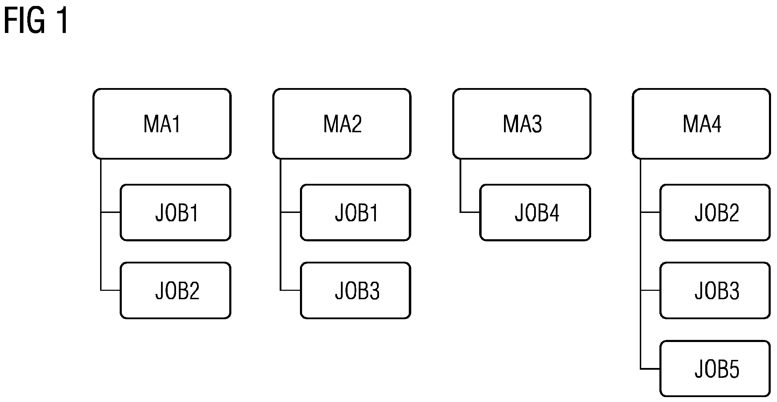

Figur 1 zeigt schematisch einen Teil einer Fabrik. Dieser umfasst die Maschinen MA1, MA2, MA3 und MA4. Bei den Maschinen kann es sich um herkömmliche Maschinen wie z.B. eine Fräsmaschine handeln, oder auch um 3D-Drucker für das additive manufacturing. Jede Maschine MA1, MA2, MA3, MA4 kann einen oder mehrere Fertigungs- oder Produktionsschritte ausführen: die Maschine MA1 beherrscht die Schritte JOB1 und JOB2, die Maschine MA2 beherrscht die Schritte JOB1 und JOB3, die Maschine MA3 beherrscht den Schritt JOB4, und die Maschine MA4 beherrscht die Schritte JOB2, JOB3 und JOB5. Die Durchführung der Produktionsschritte dient der Herstellung von Produkten. Hierbei ist es möglich, dass für ein bestimmtes Produkt nur einer oder mehrere der Produktionsschritte durchlaufen werden müssen.

Im Rahmen der Prozessplanung bzw. des so genannten scheduling erfolgt eine Maschinenbelegungsplanung, d.h. es muss entschieden werden, welcher Produktionsschritt für welches Produkt auf welcher Maschine ablaufen soll, und in welcher Reihenfolge die Maschinen die ihnen zugewiesenen Produktionsschritte abarbeiten sollen. Hierbei ist zu berücksichtigen, dass ein bestimmter Produktionsschritt bei verschiedenen Maschinen hinsichtlich Fertigungsdauer oder Verschleiß unterschiedlich gut sein kann. Der in Figur 1 gezeigte Teil einer Produktionsanlage ist stark vereinfacht, denn üblicherweise verfügen Produktionsanlagen über eine weitaus größere Anzahl von Maschinen. Hieraus folgt, dass der Maschinenbelegungsplanung ein komplexes mathematisches Problem zugrunde liegt.

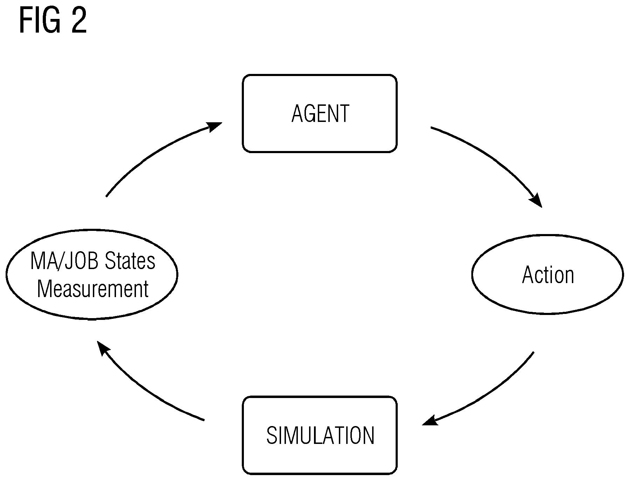

Im Folgenden wird anhand von Figur 2 beschrieben, wie ein lernfähiger Agent eingesetzt werden kann, welcher durch wiederholte Interaktion mit einer simulierten Prozessplanungsumgebung über Reinforcement Learning trainiert wird und somit die Fähigkeit erlangt, optimierte Prozesszuweisungen durchzuführen.

Beim Reinforcement Learning, d.h. dem bestärkenden oder verstärkenden Lernen, handelt es sich um eine Art des maschinellen Lernens. Hierbei erlernt ein Agent eigenständig eine Strategie, um eine erhaltene Belohnung anhand einer Belohnungs-Funktion zu maximieren. Eigenständig bedeutet, dass dem Agenten nicht gezeigt wird, welche Aktion in welcher Situation die beste ist. Der Agent erlernt somit nicht ein generalisiertes Prinzip, sondern löst ein Problem, welches u.a. durch die Belohnungs-Funktion definiert wird. Das Lernen des Agenten erfolgt mittels Trial-and-Error-Abläufen innerhalb eines für das vorliegende Problem verfassten Simulations-Szenarios. Diese Simulation stellt somit die Lernumgebung für den Agenten dar. Eine Belohnung erhält der Agent nur nach einem erfolgreichen Durchlauf, und da er versucht, ein Maximum an Belohnungen zu erhalten, nehmen die erfolgreichen Durchläufe im Laufe des Lernens zu.

Für die Lernstrategie des Agenten können an sich verschiedene Verfahren zum Einsatz kommen. Bei einer kleinen Anzahl von Zuständen des simulierten Systems oder einer kleinen Anzahl möglicher Aktionen des Agenten eignen sich z.B. Monte-Carlo-Methoden. Bei großen Zustandsräumen hingegen kommt vorzugsweise ein neuronales Netz zum Einsatz. Insbesondere tiefe neuronale Netze eignen sich hierfür, bekannt ist dies unter dem Begriff Deep Learning.

Figur 2 zeigt den iterativen Lernzyklus des Agenten AGENT in Wechselwirkung mit der Simulation SIMULATION. Der Agent AGENT ist hierbei ein Computerprogramm, welches einen lernfähigen Algorithmus beinhaltet. In der Simulation SIMULATION ist die betrachtete Umgebung, innerhalb derer der Agent AGENT lernen soll, abgebildet. Vorliegend handelt es sich hierbei um die in Figur 1 gezeigte Produktionsanlage. Die Simulation SIMULATION ist ein Computerprogramm, welches über geeignete Schnittstellen mit dem Agenten AGENT verbunden ist, so dass es die Handlungsanweisungen Action des Agenten AGENT empfangen und den aktuellen Zustand der Simulation SIMULATION in Form des Maschinen- und Produktionszustandes MA/JOB States und der aktuellen KPIs Measurement an den Agenten AGENT übergeben kann.

Die Simulation SIMULATION verfügt für jede Maschine des betrachteten Systems über die folgenden Informationen:
- Produktportfolio: dieser statische Parameter gibt an, welcher oder welche Prozessschritte auf der jeweiligen Maschine ablaufen kann. Diese Information lässt sich auch der Figur 1 entnehmen.
- Warteschlange: dieser dynamische Parameter gibt die Reihenfolge der durchzuführenden Prozessschritte, also der bereits durch eine Handlungsanweisung Action des Agenten AGENT zugewiesenen aber noch nicht durchgeführten Prozessschritte, auf der jeweiligen Maschine an. Dies impliziert, dass der Agent AGENT Produktionsschritte auch einer Maschine zuweisen kann, welche aktuell belegt ist.
- Betriebszustand: dieser dynamische Parameter gibt an, ob die jeweilige Maschine aktuell läuft. Hierbei kann unterschieden werden zwischen den Zuständen RUNNING, d.h. die Maschine führt Prozessschritte durch, und IDLE, d.h. die Maschine arbeitet aktuell nicht, könnte bei Bedarf aber benutzt werden, sowie FAIL, d.h. die Maschine kann aufgrund eines Fehlers aktuell nicht arbeiten.
- Abnutzung: dieser dynamische Parameter gibt die Wahrscheinlichkeit dafür an, dass die jeweilige Maschine ausfällt und gewartet oder repariert werden muss. Diese Wahrscheinlichkeit erhöht sich mit dem Zeitablauf oder der Anzahl durchgeführter Prozessschritte.

Ferner verfügt die Simulation SIMULATION für jeden offenen Prozessschritt, also für jeden durchzuführenden und noch nicht vom Agenten AGENT in einer Handlungsanweisung Action zugewiesenen Prozessschritt, über die folgenden Informationen:
- geeignete Maschine: dieser Parameter gibt an, welche Maschine oder welche Maschinen für den jeweiligen Prozessschritt eingesetzt werden können. Diese Information lässt sich auch der Figur 1 entnehmen.
- Fälligkeitsdatum: dieser Parameter gibt an, bis wann der jeweilige Prozessschritt durchgeführt sein muss.
- Prozessdauer: dieser Parameter gibt an, wie viel Zeit die Durchführung des jeweiligen Prozessschrittes benötigt. Dies kann abhängig von der Maschine sein, so dass es sich hierbei um eine Liste von Werten handeln kann.
- Entgelt: dieser Parameter gibt an, welche Einnahme die Durchführung des jeweiligen Prozessschrittes einbringt.
- Verspätungsstrafe: dieser Parameter gibt an, welcher Verlust durch die gegenüber dem Fälligkeitsdatum verspätete Durchführung des jeweiligen Prozessschrittes entsteht.

In der Handlungsanweisung action gibt der Agent AGENT der Simulation SIMULATION ein Zweier-Tupel vor, bestehend aus durchzuführendem Prozessschritt und Maschine. Daraufhin entfernt die Simulation SIMULATION diesen Prozessschritt aus der Liste der offenen Prozessschritte und fügt ihn der Warteschlange der jeweiligen Maschine hinzu. Ferner rechnet die Simulation SIMULATION den Zustand der simulierten Anlage einen Zeitschritt nach vorne und bestimmt die oben erläuterten Parameter neu.

Die Länge eines Zeitschrittes ist hierbei an der Zeitdauer orientiert, welche die Durchführung eines Prozessschrittes in Anspruch nimmt. Z.B. kann ein Zeitschritt so bemessen sein, dass die Durchführung eines Prozessschrittes ca. 10-15 Zeitschritte in Anspruch nimmt.

Der Zustand der Simulation SIMULATION zu einem gegebenen Zeitpunkt ergibt sich, wie oben anhand der Parameter beschrieben, aus den Teilzuständen der einzelnen Maschinen, sowie den Eigenschaften der offenen Prozessschritte. Es handelt sich hierbei um eine aktuelle grundlegende Beschreibung der simulierten Umgebung. In einem passend formatierten Informationspaket wird dies als Maschinen- und Produktionszustand MA/JOB States an den Agenten AGENT übertragen. Der Maschinen- und Produktionszustand MA/JOB States enthält die aktuellen Werte der oben erläuterten Parameter der Maschinen und offenen Prozessschritte in einer für den Agenten AGENT verständlichen Form. Dieser Maschinen- und Produktionszustand MA/JOB States ist der Raum, in dem der Agent AGENT seine Aktionen durchführt, indem er Handlungsanweisungen Action bestimmt und an die Simulation SIMULATION übermittelt.

Ferner werden auch die relevanten aktuellen KPIs Measurement, welche von der Simulation SIMULATION ermittelt werden, an den Agenten AGENT übertragen. Diese Leistungskennzahlen dienen der Bewertung der Prozessplanung aus wirtschaftlicher und Performance-Sicht. Je nach Gegebenheiten des simulierten Systems können weitere als die im folgenden beschriebenen KPIs Measurement verwendet werden. Besonders relevant sind:
- Anzahl der gemäß der Zuweisung durch den Agenten AGENT bereits durchgeführten Prozessschritte.
- Gesamteinnahme: dies entspricht der Summe des Entgelt Parameters der gemäß der Zuweisung durch den Agenten AGENT durchgeführten Prozessschritte.
- Energieverbrauch: dies entspricht der gesamten Energie, welche für die Durchführung der gemäß der Zuweisung durch den Agenten AGENT durchgeführten Prozessschritte aufgebracht werden musste.
- Leerzeit: dies entspricht der Summe der Zeitabschnitte, in welchen die Maschinen nicht gelaufen sind, summiert über alle Maschinen. Dies geht aus dem Parameter Betriebszustand hervor: in dem Zustand IDLE hat die jeweilige Maschine eine Leerzeit.

Dem Agent AGENT wird ein Optimierungsziel vorgegeben. Dieses lässt sich durch eine Zielsetzungsgewichtung der KPIs Measurement definieren. Der Agent AGENT verfügt hierzu über eine Gewichtungsfunktion, in welche die erhaltenen Werte der KPIs Measurement eingesetzt werden. Ein Beispiel für eine solche Gewichtungsfunktion wäre:
- Die Leerzeit wird mit dem Faktor -1 gewichtet. Dies bedeutet, dass eine möglichst geringe Leerzeit angestrebt wird.
- Der Energieverbrauch wird mit dem Faktor 0 gewichtet. Dies bedeutet, dass der Energieverbrauch keine Rolle spielt.
- Die Gesamteinnahme wird mit dem Faktor +1 gewichtet. Dies bedeutet, dass eine möglichst hohe Gesamteinnahme wünschenswert ist.

Aus dem von ihm empfangenen Maschinen- und Produktionszustand MA/JOB States und den KPIs Measurement bestimmt der Agent AGENT eine Vorhersage über zukünftige KPIs Measurement. Aus der Zielsetzungsgewichtung dieser vorhergesagten KPIs Measurement ergibt sich daraufhin eine Handlungsanweisung Action. Dies erfolgt, indem eine Handlungsanweisung Action ausgegeben wird, welche den Wert der Gewichtungsfunktion maximiert. Diese Handlungsanweisung Action besteht aus einem Wertetupel, welches zum einen eine Identifikationsnummer des zuzuweisenden offenen Prozessschrittes und zum anderen eine Identifikationsnummer der entsprechenden Maschine, auf welcher der Prozessschritt ausgeführt werden soll, angibt. Die Simulation setzt diese Handlungsanweisung Action entsprechend um und führt ihre Kalkulation um einen weiteren Iterationsschritt fort, um den nächsten Zustand zu generieren. Der Agent AGENT lernt somit durch Interaktion mit der Simulation SIMULATION eine optimierte Planung gegeben ihres zeitschrittweisen Zustandes zu berechnen.

Der Agent beinhaltet ein tiefes neuronales Netz. Er benutzt ein Optimierungsverfahren, über welches die Vorhersagen über zukünftige KPIs Measurement berechnet werden. D.h. es erfolgt keine zufällige, sondern eine zielgerichtete Variation der möglichen Handlungsanweisungen Action. Hierfür eignet sich z.B. ein Gradientenverfahren. Durch ein solches fehlerminimierendes Optimierungsverfahren wird die Präzision der Vorhersagen somit stetig optimiert, wodurch sich auch die Güte der Handlungsanweisungen Action hinsichtlich der vorgegebenen Gewichtungsfunktion verbessert.

Das direkte Optimierungsziel des Agenten AGENT ist die korrekte Vorhersage der KPIs Measurement für die Zukunft der Simulation SIMULATION gegeben der Ausführung einer bestimmten Handlungsanweisung Action. Hieraus berechnet der Agent AGENT seine Belohnung. Die Auswahl der auszuführenden Handlungsanweisung Action erfolgt anhand der Gewichtung dieser Vorhersage mit dem angegebenen Optimierungsziel. Der Agent AGENT lernt somit, seine Lösung hinsichtlich des Optimierungsziels, sprich der vorgegebenen Zielsetzungsgewichtung, anzupassen.

Der Agent AGENT ist in der Lage, auf neue Ereignisse unmittelbar zu reagieren. Z.B. kann die Simulation SIMULATION Maschinenausfälle oder Bestellungseingänge, also neue offene Prozessschritte, erzeugen. Diese Ereignisse werden über die Parameter des Maschinen- und Produktionszustand MA/JOB States dem Agenten AGENT mitgeteilt.

Zu betonen ist, dass beim beschriebenen Vorgehen ein einziger Agent AGENT zum Einsatz kommt, der die Maschinenbelegungsplanung für die gesamte Anlage erlernt und durchführen kann. Somit kann dieser eine globale Lösung für das gesamte Problem unter Einbezug aller Zustandsparameter gewährleisten. Würde hingegen nicht mit einem einzelnen Agenten gearbeitet, sondern eine Vielzahl von Agenten auf einzelne Sub-Probleme angewendet, so wäre eine übergreifende Optimierung hinsichtlich des Gesamtproblems nur bedingt oder gar nicht möglich.

Bei der Implementierung eines einzelnen Agenten AGENT zur Lösung des gesamten Problems ergibt sich die Problematik eines variablen Aktionsraumes, d.h. zu jedem Zeitschritt der Simulation SIMULATION können unterschiedlich viele Aktionen möglich sein. Im Falle der Fabriksimulation äußert sich dies konkret darin, dass abhängig von der Anzahl der momentan offenen Prozessschritte unterschiedlich viele Handlungsanweisungen Action möglich sind. Dieses Problem kann bei der Programmierung des Agenten AGENT gelöst werden, indem das tiefe neuronale Netz des Agenten AGENT parallel auf die Eingabewerte jeder möglichen Handlungsanweisung Action, also jedes möglichen Prozessschritt-Maschine-Paares, angewandt wird und für jede dieser Handlungsanweisungen Action Vorhersagen hinsichtlich der KPIs Measurement ausgibt. Ebenfalls wichtig ist, dass das neuronale Netz eine interne Repräsentation der vorhergehenden Handlungsanweisungen Action speichert, sodass diese in der Vorhersage berücksichtigt werden und der Agent AGENT entsprechend lernen kann, Zuweisungen in optimaler Reihenfolge vorzunehmen.

Die Simulation SIMULATION ist hinsichtlich der simulierten Umgebung frei konfigurierbar, d.h. Maschinenportfolio, Produktportfolio, Fertigungszeiten, Bestellfrequenzen oder Ausfallwahrscheinlichkeiten lassen sich zu Beginn des Trainingsprozesses bestimmen. Hierdurch kann eine bestimmte echte Prozessumgebung realistisch abgebildet werden, einschließlich stochastischer Ereignisse wie z.B. Bestelleingänge oder Maschinenausfälle. Auf dieser entsprechend konfigurierten Simulation SIMULATION kann dann der Agent AGENT trainiert werden, bis er das angestrebte Optimierungsziel erfüllt. Danach kann der Agent AGENT in der echten Umgebung zum Einsatz zu kommen. D.h. der Agent AGENT führt die Maschinenbelegungsplanung in einer Fabrik durch, wobei er den echten Maschinen- und Produktionszustand aus der realen Umgebung mitgeteilt bekommt und hieraus die von ihm mit der Simulation SIMULATION erlernten Handlungsanweisungen ausgibt. Hierzu weist der Agent AGENT geeignete Schnittstellen Austausch von Informationen mit der echten Umgebung auf. Ferner ist auch eine Fortführung der Optimierung anhand der in der echten Umgebung gesammelten Daten möglich.

Herkömmliche Verfahren erlauben i.d.R. nur das Optimieren eines einzigen Zielparameters, bspw. der Ausführungsdauer. Bei dem hier beschriebenen Verfahren können verschiedene Leistungskennzahlen in Betracht gezogen und die Optimierung hinsichtlich einer entsprechenden Zielsetzungsgewichtung durchgeführt werden. Somit lassen sich verschiedene Planungsoptimierungen vorgeben, bspw. auch hinsichtlich Energieverbrauch oder Gewinnoptimierung.

Während des Lernvorgangs wird das Optimierungsziels durch Vorgabe einer neuen Zielsetzungsgewichtung variiert. Der Agent AGENT passt seinen Lernvorgang automatisch daran an. Diese Änderungen erfolgen so oft, bis die Agent AGENT die Optimierung bei vielen möglichen Zielsetzungsgewichtung gelernt hat. Die Anzahl an möglichen Zielsetzungsgewichtung ergibt sich hierbei aus der Anzahl der verwendeten KPIs Measurement. Dieses Vorgehen hat den Vorteil, dass beim laufenden Betrieb, d.h. wenn der Agent AGENT für die Maschinenbelegungsplanung in einer echten Umgebung eingesetzt wird, ein Änderung der dem Agenten AGENT vorgegebenen Zielsetzungsgewichtung möglich ist, ohne dass der Agent AGENT neu lernen muss. Ein neuer Lernvorgang ist hingegen dann nötig, wenn sich die echte Umgebung von der Simulation SIMULATION unterscheidet, oder wenn andere KPIs Measurement zum Einsatz kommen sollen.

Bei traditionellen Lösungsverfahren, welche nicht auf Reinforcement Learning basieren, steigt der erforderliche Rechenaufwand bei Vergrößerung der Problemkomplexität, d.h. bei Vergrößerung des der Prozessplanung zugrunde liegenden Systems, i.d.R. rapide an, sodass diese Ansätze nicht mehr praktikabel sind. Das Reinforcement Learning, insbesondere unter Verwendung eines tiefen neuronales Netzes, dagegen bringt den Vorteil mit sich, dass die Laufzeit im echten Betrieb, d.h. in der tatsächlichen Anwendung der erlernten Lösung, sehr gering ist. Dies bedeutet, dass der Agent AGENT im Betrieb vernachlässigbar wenig Zeit benötigt, um die Maschinenbelegungsplanung zu berechnen. Steigt die Komplexität des Planungsproblems, d.h. wird ein größeres System betrachtet, so muss der Agent AGENT in seiner Komplexität zwar erweitert werden und bedarf oftmals deutlich längerer Trainings- oder Lernzeiten, welche in der Größenordnung von Tagen liegen können, jedoch vergrößert sich die Laufzeit der fertigen Anwendung lediglich innerhalb der üblichen Größenordnung von Sekunden. Dementsprechend können mit dem vorgestellten Vorgehen auch große, komplexe Systeme geplant werden.

Die Qualität des Agenten AGENT lässt sich leicht überprüfen: zunächst findet im Rahmen des Reinforcement Learning die wiederholte Interaktion des software-basierten Agenten AGENT mit der ebenfalls software-basierten Simulation SIMULATION zur Optimierung der durch den Agenten AGENT ausgeführten Handlungsanweisungen Action hinsichtlich eines bestimmten Zieles statt. Die durch wiederholtes Durchführen des Zyklus entstehenden Daten hinsichtlich Maschinen- und Produktionszustand MA/JOB States, der KPIs Measurement und Handlungsanweisungen Action werden stetig aufgezeichnet. Rückblickend lässt sich dann evaluieren, wie akkurat die Vorhersage der KPIs Measurement durch das neuronale Netz des Agenten AGENT war.

Die Erfindung wurde anhand des Beispiels der Produktionsplanung in Fabriken erläutert. Zusammenfassend formuliert findet der folgende Anwendungsverlauf statt:
Der zu planende Prozess wird in seinen deterministischen und stochastischen Eigenschaften dokumentiert und in eine Simulation SIMULATION übertragen. Hierbei besteht die Simulation SIMULATION in allgemeiner Form üblicherweise bereits und muss lediglich dem echten Ablauf entsprechend parametrisiert werden. Daraufhin wird der Agent AGENT durch wiederholte Interaktion mit der Simulation SIMULATION trainiert, so dass er für die Eigenschaften des Prozesses optimierte Lösungen ausgeben kann, welche zudem durch Vorgabe des Optimierungsziels angepasst werden können. Die Güte dieser Optimierung lässt sich ebenfalls durch Interkation mit der Simulation SIMULATION testen. Der fertig trainierte Agent AGENT kann dann in der realen Umgebung ebenso angewandt werden, indem er zu bestimmten Zeitpunkten deren zur Simulation SIMULATION äquivalenten Zustandswerte übergeben bekommt und daraufhin seinen empfohlenen Prozessplan in Form einer Reihe von Handlungsanweisungen Action ausgibt.

Ähnliche Probleme wie bei der Produktionsplanung treten auch in diversen anderen Geschäftsfeldern auf, bspw. in der Lagerlogistik, Lieferplanung, Wartungsplanung oder Prozessen, in denen mehrere dieser Probleme auftreten und miteinander wechselwirken. Der vorgestellte Agent AGENT ist in seiner algorithmischen Beschaffenheit so flexibel konzipiert, dass er bei korrekter Abbildung des zu lösenden Problems durch die Simulationsumgebung SIMULATION jede dieser Planungsaufgaben erlernen und eine optimierte Lösung produzieren kann.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zur Maschinenbelegungsplanung, bei dem
ein Agent (AGENT) die Maschinenbelegungsplanung anhand einer eine Fertigungsanlage abbildenden Simulation (SIMULATION) erlernt,
wobei das Lernen durch den Agenten (AGENT) iterativ als reinforecment learning erfolgt, indem der Agent (AGENT) wiederholt jeweils einer oder mehreren Maschinen (MA1, MA2, MA3, MA4) der Fertigungsanlage mindestens einen Prozessschritt (JOB1, ..., JOB5) zuweist (Action), und
der Agent (AGENT) im Anschluss an das Lernen die Maschinenbelegungsplanung einer der Simulation (SIMULATION) entsprechenden Fertigungsanlage durchführt.

2. Verfahren nach Anspruch 1, bei dem
das reinforcement learning unter Verwendung eines tiefen neuronalen Netzes des Agenten (AGENT) erfolgt.

3. Verfahren nach einem der Ansprüche 1 bis 2, bei dem vom Agenten (AGENT) wiederholt eine oder mehrere der folgenden von der Simulation (SIMULATION) übermittelten Informationen (MA/JOB States) betreffend die Maschinen (MA1, MA2, MA3, MA4) der Fertigungsanlage empfangen werden:
- eine Zuordnung zwischen jeweiliger Maschine (MA1, MA2, MA3, MA4) und auf ihr durchführbarem Prozessschritt (JOB1, ..., JOB5),
- der jeweiligen Maschine (MA1, MA2, MA3, MA4) durch den Agenten (AGENT) bereits zugewiesene Prozessschritte (JOB1, ..., JOB5),
- einen Betriebszustand der jeweiligen Maschine (MA1, MA2, MA3, MA4),
- eine Abnutzung der jeweiligen Maschine (MA1, MA2, MA3, MA4).

4. Verfahren nach einem der Ansprüche 1 bis 3, bei dem vom Agenten (AGENT) wiederholt eine oder mehrere der folgenden von der Simulation (SIMULATION) übermittelten Informationen (MA/JOB States) betreffend durch den Agenten (AGENT) noch nicht zugewiesene Prozessschritte (JOB1, ..., JOB5) empfangen werden:
- eine Zuordnung zwischen jeweiligem Prozessschritt (JOB1, ..., JOB5) und hierfür geeigneter Maschine (MA1, MA2, MA3, MA4),
- Fälligkeitsdatum des jeweiligen Prozessschrittes (JOB1, ..., JOB5),
- Dauer der Durchführung des jeweiligen Prozessschrittes (JOB1, ..., JOB5),
- erzielbare Einnahme aufgrund der Durchführung des jeweiligen Prozessschrittes (JOB1, ..., JOB5),
- entstehender Verlust aufgrund nicht erfolgter oder verspäteter Durchführung des jeweiligen Prozessschrittes (JOB1, ..., JOB5).

5. Verfahren nach einem der Ansprüche 1 bis 4, bei dem vom Agenten (AGENT) wiederholt eine oder mehrere der folgenden von der Simulation (SIMULATION) übermittelten Leistungskennzahlen (Measurement) empfangen werden:
- Anzahl gemäß einer Zuweisung (Action) durch den Agenten (AGENT) durchgeführter Prozessschritte (JOB1, ..., JOB5),
- Einnahme aufgrund gemäß einer Zuweisung (Action) durch den Agenten (AGENT) durchgeführter Prozessschritte (JOB1, ..., JOB5),
- Energieverbrauch aufgrund gemäß einer Zuweisung (Action) durch den Agenten (AGENT) durchgeführter Prozessschritte (JOB1, ..., JOB5),
- Leerzeit von Maschinen (MA1, MA2, MA3, MA4).

6. Verfahren nach einem der Ansprüche 1 bis 5, bei dem
der Agent (AGENT) iterativ Zuweisungen (Action) von mindestens einem Prozessschritt (JOB1, ..., JOB5) zu einer oder mehreren Maschinen (MA1, MA2, MA3, MA4) an die Simulation (SIMULATION) übermittelt, und daraufhin Informationen betreffend den Zustand der Fertigungsanlage von der Simulation (SIMULATION) empfängt.

7. Verfahren nach Anspruch 6, bei dem
pro Iteration der Agent (AGENT) eine Zuweisung (Action) als Zweier-Tupel an die Simulation (SIMULATION) übermittelt, bestehend aus einer Angabe eines Prozessschritts und einer Maschine (MA1, MA2, MA3, MA4), und
der Agent (AGENT) von der Simulation (SIMULATION) Informationen empfängt betreffend den unter Berücksichtigung dieser Zuweisung (Action) sich ergebenden Zustand der Fertigungsanlage.

8. Verfahren nach einem der Ansprüche 1 bis 7, bei dem
der Agent (AGENT) die Zuweisungen (Action) bestimmt, indem er eine Zielsetzungsgewichtung von der Simulationen (SIMULATION) empfangenen Leistungskennzahlen (Measurement) optimiert.

9. Verfahren nach Anspruch 8, bei dem
die Zielsetzungsgewichtung variiert wird, so dass der Agent (AGENT) die Maschinenbelegungsplanung basierend auf verschiedenen Zielsetzungsgewichtungen erlernt.

10. Verfahren nach einem der Ansprüche 1 bis 9, bei dem
der Agent (AGENT) im Rahmen des reinforcement learning eine Belohnung bestimmt, indem er von der Simulation (SIMULATION) empfangene Leistungskennzahlen (Measurement) mit von ihm berechneten Leistungskennzahlen vergleicht.

11. Vorrichtung oder System zur Datenverarbeitung, umfassend Mittel zur Ausführung des Verfahrens nach einem der Ansprüche 1 bis 10.

12. Computerprogramm, umfassend Befehle, die bei der Ausführung des Programms durch einen Computer diesen veranlassen, die Schritte des Agenten (AGENT) und/oder der Simulation (SIMULATION) des Verfahrens nach einem der Ansprüche 1 bis 10 auszuführen.

13. Computerlesbarer Datenträger, auf dem das Computerprogramm nach Anspruch 12 gespeichert ist.

14. Datenträgersignal, das das Computerprogramm nach Anspruch 12 überträgt.
